# EUROPÄISCHE PATENTSCHRIFT

(11) **EP 2 019 293 B1**
(45) Veröffentlichungstag und Bekanntmachung des Hinweises auf die Patenterteilung: **10.02.2010**
(21) Anmeldenummer: 08104465.3
(22) Anmeldetag: 19.06.2008
(51) Int. Cl.: G01D 11/24, G01V 8/20

(54) **Gehäuse für eine optoelektronische Sensoranordnung**
Housing for opto-electronic sensor assembly
Corps de logement pour un dispositif optoélectronique

(30) Priorität: 27.07.2007 DE 202007010493 U
(43) Veröffentlichungstag der Anmeldung: 28.01.2009
(73) Patentinhaber: SICK AG, 79183 Waldkirch (DE)
(72) Erfinder: Meyer, Christof J., 79261, Bleibach (DE); Friedrich, Ralf, 79189, Bad Krozingen (DE)
(74) Vertreter: Ludewigt, Christoph

(56) Entgegenhaltungen:
- EP-A- 1 577 684
- DE-A1- 4 116 210
- DE-A1-102004 046 725
- DE-A1-102005 046 359
- DE-U1- 20 211 946

## Beschreibung

Die Erfindung betrifft ein Gehäuse für eine optoelektronische Sensoranordnung mit den Merkmalen des Oberbegriffs des Schutzanspruchs 1.

Bekannte optoelektronische Sensoranordnungen, wie beispielsweise Lichtschranken, Lichttaster, Lichtvorhänge oder Lichtgitter weisen ein Gehäuse auf, in welchem wenigstens ein Lichtsender und/oder ein Lichtempfänger der optoelektronischen Sensoranordnung angeordnet werden kann. Insbesondere für optoelektronische Sensoranordnungen mit mehreren Lichtsendern und/oder Lichtempfängern werden die Gehäuse oft als im Wesentlichen zylindrisches Hohlprofil beispielsweise im Aluminiumstrangpressverfahren oder im Extrusionsverfahren hergestellt. Die Hohlprofile weisen eine Frontseite, eine Bodenseite, eine erste Seitenwand und eine zweite Seitenwand auf. Die Frontseite des Gehäuses ist dabei die Seite, durch welche das von den Lichtsendern emittierte Licht aus dem Gehäuse austritt bzw. das von den Lichtempfängern detektierende Licht in das Gehäuse eintritt. Die Frontseite steht somit im Wesentlichen senkrecht zur optischen Achse der optoelektronischen Sensoranordnung.

Bekannt sind beispielsweise als O-Profil bezeichnete Hohlprofile, welche einstückig ausgebildet sind. Öffnungen in der Frontseite, welche nötig sind, damit das von den im Gehäuse angeordneten Lichtsendern emittierte Licht aus dem Gehäuse austreten bzw. das von den Lichtempfängern zu detektierende Licht in das Gehäuse eintreten kann, werden durch nachträgliche Bearbeitung, wie beispielsweise Fräsen, Bohren, Stanzen ohne Matrize oder mit lanzenförmiger Matrize mit beschränkten Gestaltungsmöglichkeiten hergestellt. Diese nachträgliche Bearbeitung ist kostenaufwändig. Das Einbringen der optoelektronischen Komponenten der optoelektronischen Sensoranordnung wie Lichtsender und/oder Lichtempfänger und der zugehörigen Elektronik erfolgt von den offenen Stirnseiten des Hohlprofils her durch Einschieben in Längsrichtung des Hohlprofils. Die Positionierung der optoelektronischen Bauelemente ist dabei sehr aufwändig. Um eine exakte Positionierung gewährleisten zu können, sind enge Bauteiltoleranzen vonnöten, welche aufwändig herzustellen sind. Zudem können beim Einschieben in das Profil Bauteile beschädigt werden.

Weiterhin bekannt sind auch als U-Profil ausgebildete Hohlprofile, deren verbleibende offene Seite durch ein Frontscheibenelement aus für das Licht durchlässigem Material über die gesamte Länge geschlossen wird. Die Montage der optoelektronischen Bauelemente kann entweder über die Frontseite, die erst nachträglich geschlossen wird, oder auch von den Stirnseiten her erfolgen. Die Montage von den Stirnseiten her birgt die bereits beschriebenen Probleme. Allerdings ist beim nachträglichen Einsetzen der Frontscheibe über die gesamte Länge eine Abdichtung vonnöten. Diese Dichtung ist insbesondere bei Verwendung verschiedener Materialen auf Grund der unterschiedlichen Temperaturausdehnungskoeffizienten besonders schwierig. Außerdem sind zusätzliche optische Blenden erforderlich, die die Herstellungskosten erhöhen. Das U-profilartige Gehäuse weist zudem den Nachteil einer lediglich geringen Steifigkeit auf.

Die EP 1 180 697 A1 offenbart einen Lichtvorhang, dessen Gehäuse komplett modular aufgebaut ist. Für jede der Seiten des Hohlprofils, das heißt der Frontseite, der Bodenseite und den beiden Seitenwänden, wird ein separates Bauteil gefertigt, welche anschließend aufwändig zusammengesetzt werden müssen. Einerseits ist eine Vielzahl von Bauteilen vonnöten, andererseits weist dieses Gehäuse den Nachteil auf, dass Abdichtungen entlang jeder Längskante vonnöten sind. Zudem muss jedes der Bauteile mit hoher Genauigkeit gefertigt werden, was die Herstellungskosten erhöht.

Die Aufgabe der Erfindung besteht daher darin, ein Gehäuse für eine optoelektronische Sensoranordnung bereitzustellen, welches kostengünstig herzustellen und einfach zu montieren ist.

Die Aufgabe der Erfindung wird gelöst durch ein Gehäuse für eine optoelektronische Sensoranordnung mit den Merkmalen des Schutzanspruchs 1.

Vorteilhafte Ausgestaltungen und Weiterbildungen der Erfindung sind in den Unteransprüchen angegeben.

Das erfindungsgemäße Gehäuse ist aus genau einem ersten Element und einem zweiten Element zusammengesetzt, wobei das erste Element wenigstens die erste Seitenwand umfasst und das zweite Element wenigstens die zweite Seitenwand umfasst. Einerseits wird durch den Aufbau des Hohlprofils aus zwei Elementen, welche schalenartig zusammengesetzt werden können, eine Vielzahl von Einzelteilen wie bei einer vollständig modulartigen Bauweise vermieden. Aber auch ein einstückiges Hohlprofil oder O-Profil, welches die Montage der optoelektronischen Komponenten im Inneren des Gehäuses deutlich behindert, wird somit vermieden. Dadurch, dass die beiden Seitenwände des Gehäuses in zwei getrennten Elementen angeordnet sind, kann zur Montage die erste Seitenwand entfernt werden, sodass die montierende Person von der Seite her auf die zu montierende Optik blicken kann. Dies hat erhebliche Vorteile gegenüber dem Blick auf die zu montierende Optik in Richtung der optischen Achse bei Einsetzen der Optik durch die Frontscheibe, da nun in Blickrichtung nicht ein ggf. vorhandenes optisches Element vor dem Lichtsender oder dem Lichtempfänger liegt, sondern die beiden Komponenten nebeneinander liegen. Zudem ist bei den herkömmlichen optoelektronischen Sensoranordnungen die Breite der Seitenwände größer als die Breite der Front- oder Bodenseite, sodass auch auf diese Weise der Zugang zum Inneren des Gehäuses vereinfacht wird.

Dadurch, dass die Seitenwand des Gehäuses entfernt werden kann, wird ermöglicht, Tests der optoelektronischen Komponenten der optoelektronischen Sensoranordnung am offenen Gehäuse durchzuführen, da eine testende Person nicht in Richtung der optischen Achse, sondern senkrecht zur optischen Achse in das Gehäuse hineinblickt, sodass keine Gefahr für die Person beispielsweise bei der Verwendung von Laserdioden als Lichtsender besteht.

Der zweischalige Aufbau hat weiterhin den Vorteil, dass die hohe Steifigkeit beispielsweise von O-profilartigen geschlossenen Gehäusen erhalten bleibt und zwei Elemente aus gleichem Material miteinander verbunden werden müssen, sodass keine Probleme durch unterschiedliche Temperaturausdehnungskoeffizienten wie bei verschiedenen Materialien auftreten. Der erfindungsgemäße Aufbau des Gehäuses aus genau zwei Elementen, nämlich dem ersten und zweiten Element, bezieht sich dabei lediglich auf das Hohlprofil. Selbstverständlich können weitere Elemente im Innern des Gehäuses angeordnet werden. Ebenso können selbstverständlich die Stirnseiten des Hohlprofils mit weiteren Elementen verschlossen werden.

In einer ersten bevorzugten Alternative der Erfindung umfasst das erste Element die erste Seitenwand und die Frontseite und das zweite Element die zweite Seitenwand und die Bodenseite. In einer alternativen bevorzugten Ausführungsform umfasst das erste Element lediglich die erste Seitenwand, während das zweite Element die zweite Seitenwand, die Frontseite und die Bodenseite umfasst. Beide Varianten ermöglichen die zuvor beschriebene vereinfachte Montage und ein Testen der optoelektronischen Sensoranordnung an einem offenen Gehäuse nach Entfernen des ersten Elements. Die zweite Variante hat zudem den Vorteil, dass die optischen Bezugskanten von optischer Blende in der Frontseite und Befestigung an der Bodenseite in einem Element angeordnet sind, sodass die Position dieser Bezugskanten relativ zueinander mit höherer Genauigkeit festgelegt werden kann, als wenn sich diese Bezugskanten in unterschiedlichen Elementen befinden, welche anschließend mit großem Aufwand in der gewünschten relativen Position zueinander fixiert werden müssten.

Vorzugsweise sind das erste Element und das zweite Element über einen Rast-oder Schnappmechanismus miteinander verbindbar, wobei diese Verbindung vorzugsweise gelöst werden kann, um auch nach Inbetriebnahme beispielsweise Reparaturen oder Wartungen der optoelektronischen Sensoranordnung ohne größeren Aufwand vornehmen zu können.

Für verschiedene Anwendungen ist es jedoch auch von Vorteil, dass das erste Element und das zweite Element unlösbar miteinander verbunden sind, beispielsweise mittels Verklebens, um beispielsweise gewünschte Abdichtungen zwischen dem ersten Element und dem zweiten Element zu erreichen.

Damit das von den Lichtsendern emittierte Licht bzw. das von den Lichtempfängern zu detektierende Licht in das Gehäuse einfallen kann, sind vorzugsweise in der Frontseite Öffnungen eingestanzt, welche vorzugsweise als optische Blenden für die Lichtsender bzw. die Lichtempfänger fungieren. Einzelne Öffnungen haben gegenüber einer offenen Frontseite, die durch eine Frontscheibe abgedeckt wird, den Vorteil, dass die Steifigkeit des Gehäuses erhalten bleibt. Auf Grund der erfindungsgemäßen zweischaligen Ausgestaltung des Gehäuses sind die Stanzprozesse auch bei langen Gehäusen kostengünstig realisierbar, wobei die gewünschte Genauigkeit jedoch weiterhin gewährleistet werden kann. Zudem entfallen zusätzlich in dem Gehäuse angeordnete optische Blenden, wodurch die Herstellungskosten des Gehäuses weiter reduziert werden.

Bei einer bevorzugten Ausführungsform der Erfindung sind an der ersten Seitenwand und/oder der zweiten Seitenwand parallel zur Frontseite oder zur Bodenseite weitere Zwischenwände angeordnet, in welcher vorzugsweise weitere Öffnungen eingestanzt sind, sodass die Zwischenwand als Zwischenblende fungiert. Auch diese Zwischenblenden können somit kostengünstig insbesondere durch Stanzen, mit hoher Genauigkeit hergestellt werden.

Vorzugsweise sind das erste Element und das zweite Element im kostengünstigen Aluminiumstrangpressverfahren hergestellt. Durch dieses Verfahren können lange Gehäuseelemente zur Verwendung in Lichtgittern sehr preiswert hergestellt werden. Die Gehäuselängen können dabei zwischen ca. 15 cm und 2 m, je nach gewünschter Schutzfeldlänge betragen. Durch das Strangpressverfahren können die jeweiligen Gehäuselängen je nach Bedarf durch einfaches Ablängen eines Strangpressprofilstücks hergestellt werden. Das auf diese Weise hergestellte erste und zweite Element des Gehäuses lassen sich dann einfach zu dem Gesamtgehäuse verbinden. Das Gehäuse ist vorteilhaft auch für sehr kleine Lichtgitter einsetzbar. Die Elemente können durch das Strangpressverfahren mit einem sehr kleinen Profilquerschnitt und dünnen Gehäusewänden hergestellt werden, so dass auch Gehäuse für Miniaturlichtgitter herstellbar sind.

Bevorzugt ist der optoelektronische Sensor als Lichtgitter mit dem Gehäuse ausgebildet. Lichtgitter werden eingesetzt, um Gefahrenbereiche vor Eingriffen zu schützen. Das kann beispielsweise eine Maschine wie eine Presse sein, deren Arbeitsgang sofort gestoppt werden muss, wenn Bedienpersonal der Maschine zu nahe kommt. Das Lichtgitter bildet dabei eine virtuelle Wand, deren Berührung ein Warn-, meist direkt ein Ausschaltsignal erzeugt.

Dazu wird eine Reihe von Lichtsendern verwendet, die jeweils einen Lichtstrahl auf einen gegenüberliegenden Lichtempfänger richten. Auf diese Weise entsteht ein Gitter aus zumindest parallelen Lichtstrahlen, dessen Auflösung und damit die minimale sicher detektierte Objektgröße vom Abstand der Lichtsender zueinander abhängt. Meist wird dabei nicht sichtbares Licht, sondern infrarotes Licht verwendet. Das Prinzip funktioniert aber bei nahezu beliebiger Wellenlänge.

Das Lichtgitter weist ein Empfängergehäuse mit Lichtempfängern und ein Sendergehäuse mit Lichtsendern auf. Meist werden alle Lichtsender in einem Gehäuse und alle Lichtempfänger in dem anderen Gehäuse untergebracht, um die mögliche Variantenzahl zu reduzieren. Das muss aber nicht notwendig der Fall sein, es können auch in jedem Gehäuse Lichtsender und Lichtempfänger gemischt angeordnet werden, solange jeweils eine Paarzuordnung jedes Lichtsenders zu einem Lichtempfänger möglich ist.

Insbesondere bei Lichtgittern mit sehr kleinen Gehäuse ist der erfindungsgemäße Aufbau von Vorteil, denn der bisher übliche Herstellungsschritt, die Elektronikplatinen von einer offenen Stirnseite in das Profil des Gehäuses einzuschieben, ist gerade bei miniaturisierte Lichtgittern mit sehr kleinen Profilquerschnitten sehr schwierig. Mit dem erfindungsgemäßen Aufbau des Gehäuses, lässt sich die Elektronik jedoch in einfachster Weise in eines der Elemente des Gehäuses einsetzen, ohne die Vorteile eines Gehäuses bestehend aus Profilen aufzugeben.

Die Erfindung wird anhand der folgenden Figuren ausführlich erläutert. Es zeigt:
- Figur 1: eine perspektivische Ansicht eines ersten Ausführungsbeispiels eines erfindungsgemäßen Gehäuses,
- Figur 2: eine perspektivische Darstellung eines zweiten Ausführungsbeispiels eines erfindungsgemäßen Gehäuses,
- Figur 3: eine perspektivische Darstellung eines dritten Ausführungsbeispiels eines erfindungsgemäßen Gehäuses mit geöffnetem Gehäuse,
- Figur 4: einen Querschnitt durch das Gehäuse gemäß Figur 3 und
- Figur 5: einen Querschnitt durch das Gehäuse gemäß Figur 3 mit geschlossenem Gehäuse.

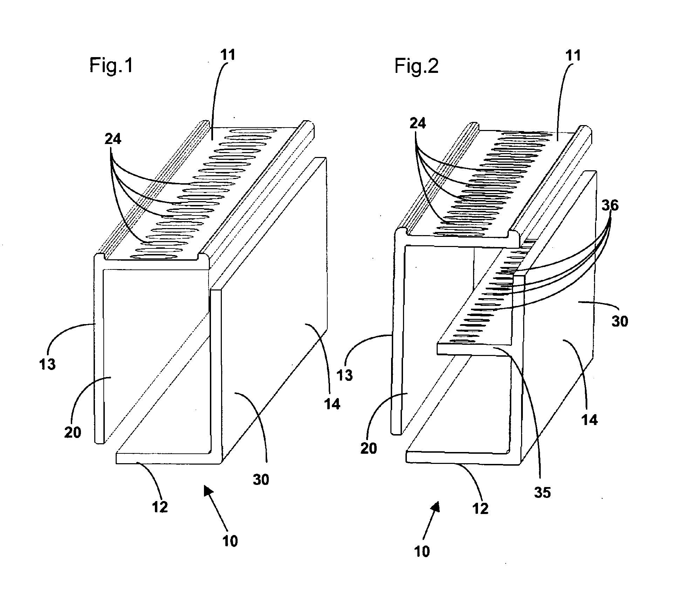

Figur 1 zeigt eine perspektivische Darstellung eines Gehäuses 10, welches im Wesentlichen als zylindrisches Hohlprofil mit einem rechteckigen Querschnitt ausgebildet ist. Das Gehäuse 10 weist eine Frontseite 11 auf, an deren Längskanten senkrecht zur Frontseite 11 eine erste Seitenwand 13 und eine zweite Seitenwand 14 parallel zueinander angeordnet sind. Parallel zur Frontseite 11 ist an den von der Frontseite 11 abgewandten Längskanten der Seitenwände 13, 14 eine Bodenseite 12 angeordnet.

Das Gehäuse 10 wird aus einem ersten Element 20 und einem zweiten Element 30 zusammengesetzt. Das erste Element ist als Winkelelement ausgebildet und umfasst die Frontseite 11 und die senkrecht zur Frontseite 11 angeordnete erste Seitenwand 13, welche über jeweils eine Längskante verbunden sind. Das zweite Element 30 ist ebenfalls winklig ausgebildet und umfasst die Bodenseite 12 und die senkrecht zur Bodenseite 12 stehende zweite Seitenwand 14, welche ebenfalls über jeweils eine Längskante verbunden sind.

Das erste Element 20 und das zweite Element 30 werden derart zusammengesetzt, dass die freie Längskante der Frontseite 11 an die freie Längskante der zweiten Seitenwand 14 und die freie Längskante der ersten Seitenwand 13 an die freie Längskante der Bodenseite 12 angrenzt. An diesen beiden Kontaktkanten können die beiden Elemente 20, 30, beispielsweise miteinander verklebt oder verschweißt werden.

In dem Gehäuse 10 werden optoelektronische Komponenten derart angeordnet, dass die optische Achse senkrecht zur Frontseite 11 und zur Bodenseite 12 verläuft. Damit Licht in das Gehäuse 10 eindringen bzw. aus diesem austreten kann, sind in der Frontseite 11 in Längsrichtung der Frontseite 11 mehrere Öffnungen 24 nebeneinander angeordnet, welche beispielsweise aus der Frontseite 11 ausgestanzt werden können, bevor das erste Element 20 auf das zweite Element 30 aufgesetzt wird. Dadurch wird es ermöglicht, die Öffnungen 24 mit hoher Genauigkeit zu stanzen. Die Öffnungen 24 dienen vorzugsweise als optische Blenden für die optischen Komponenten, die in dem Gehäuse 10 angeordnet werden.

Figur 2 zeigt eine perspektivische Darstellung eines zweiten Ausführungsbeispiels der Erfindung, wobei gleiche Teile mit den gleichen Bezugsziffern wie bei dem Ausführungsbeispiel gemäß Figur 1 bezeichnet sind. Das Ausführungsbeispiel gemäß Figur 2 unterscheidet sich von dem in Figur 1 dargestellten Ausführungsbeispiel lediglich dadurch, dass zusätzlich an dem zweiten Element 30 eine Zwischenwand 35 parallel zur Bodenseite 12 etwa auf halber Höhe der zweiten Seitenwand 14 angeordnet ist. In der Zwischenwand 35 sind in Längsrichtung des Gehäuses 10 nebeneinander mehrere Öffnungen 36 angeordnet, welche ebenfalls beispielsweise durch einen Stanzprozess hergestellt werden können. Die Öffnungen 36 dienen als Zwischenblende für die in dem Gehäuse 10 anzuordnenden optischen Komponenten, sodass vorzugsweise unter jeder Öffnung 24 der Frontseite 11 eine Öffnung 36 in der Zwischenwand 35 angeordnet ist.

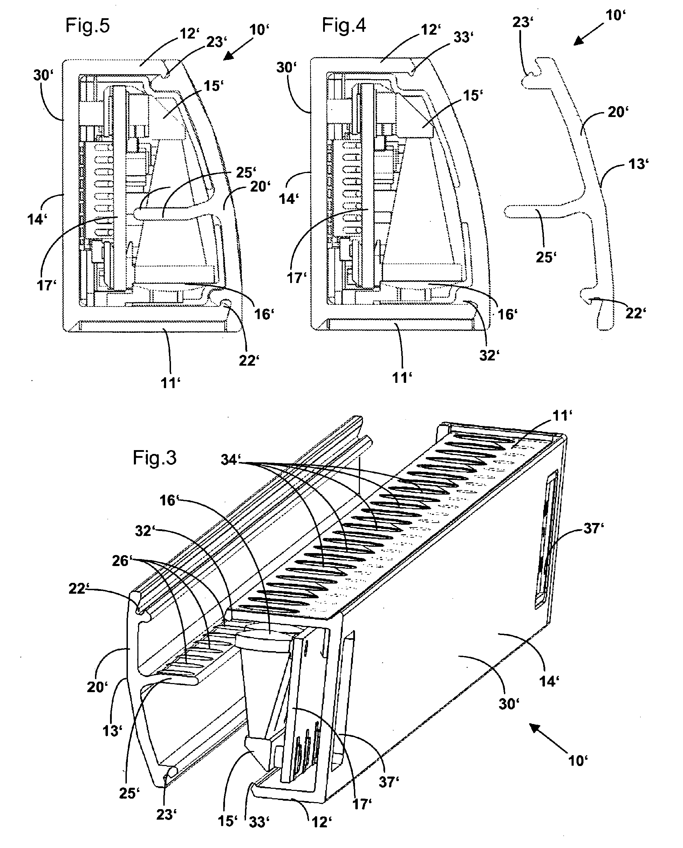

Ein weiteres Ausführungsbeispiel eines erfindungsgemäßen Gehäuses 10' mit darin angeordneten optischen Komponenten zeigen die Figuren 3, 4, und 5. Das Gehäuse 10' ist wiederum aus einem ersten Element 20' und einem zweiten Element 30' zusammengesetzt. Wie insbesondere in Figur 5 zu sehen, weist das Gehäuse 10' im zusammengesetzten Zustand einen im Wesentlichen rechteckigen Querschnitt auf und ist als zylindrisches Hohlprofil mit einer Frontseite 11', einer Bodenseite 12', einer ersten Seitenwand 13' und einer zweiten Seitenwand 14' ausgebildet. Die Seitenwände 13', 14' sind jeweils im Wesentlichen parallel zueinander, während die Frontseite 11' im Wesentlichen parallel zur Bodenseite 12' verläuft. Das erste Element 20' bildet in diesem Ausführungsbeispiel lediglich die erste Seitenwand 13', während das zweite Element 30' die Frontseite 11', die zweite Seitenwand 14' und die Bodenseite 12' umfasst.

Das erste Element 20' weist entlang seiner beiden Längskanten jeweils eine Rastnase 22', 23' auf. Die Rastnase 22' greift in eine Rastausnehmung 32' ein, die sich entlang der freien Längskanten der Frontseite 11' erstreckt, während die Rastnase 23' in eine Rastausnehmung 33' eingreift, welche sich entlang der freien Längskante der Bodenseite 12' erstreckt. Über diese Rastverbindungen wird das erste Element 20' mit dem zweiten Element 30' verbunden. Diese Rastverbindungen können lösbar ausgebildet sein, sodass das erste Element 20' jederzeit von dem zweiten Element 30' entfernt werden kann, um einen einfachen Zugang zum Innenraum des Gehäuses 10' auch nach Inbetriebnahme der optoelektronischen Sensoranordnung zu ermöglichen.

In dem zweiten Element 30' können bei noch nicht aufgesetztem ersten Element 20' die optischen Komponenten der optoelektronischen Sensoranordnung einfach montiert werden. Parallel zur zweiten Seitenwand 14 verläuft eine Platine 17', auf welcher die elektronische Kontaktierung ermöglicht wird. In Längsrichtung des Gehäuses 10' sind nebeneinander mehrere Lichtsender 15' angeordnet, vor welchen jeweils eine Linse 16' als optisches Element angeordnet ist. Die optische Achse von Lichtsender 15' und zugehöriger Linse 16' verläuft parallel zur zweiten Seitenwand 14' und senkrecht zur Frontseite 11' und zur Bodenseite 12'. Die Lichtsender 15' sind dabei derart angeordnet, dass das Licht in Richtung auf die Innenseite der Frontseite 11' emittiert wird. Damit das von den Lichtsendern 15' emittierte Licht aus dem Gehäuse 10' austreten kann, sind in der Frontseite 11' vor jeder der Linsen 16' Öffnungen 34' angeordnet, die gleichzeitig als optische Blenden dienen. An dem ersten Element 20' ist in Längsrichtung verlaufend eine Zwischenwand 25' angeordnet, die bei aufgesetzten erstem Element 20' auf das zweite Element 30' im Wesentlichen parallel zur Frontseite 11' und zur Bodenseite 12' zwischen der Frontseite 11' und der Bodenseite 12' verläuft. In der Zwischenwand 25' sind nebeneinander mehrere Öffnungen 26' angeordnet, wobei zwischen jedem Lichtsender 15' und der zugehörigen Öffnung 34' in der Frontseite 11' jeweils eine Öffnung 26' angeordnet ist. Die Öffnungen 26' dienen als Zwischenblende.

Dadurch, dass die erste Seitenwand 13' von dem Gehäuse 10' entfernt werden kann, wird die Montage der Lichtsender 15' und der Linse 16' deutlich vereinfacht, da eine Person senkrecht zur optischen Achse auf die optischen Komponenten blicken kann und die Linsen 16' die Lichtsender 15' nicht, wie bei Blickrichtung entlang der optischen Achse, verdecken. Zudem wird somit auch ein Testen der optischen Komponenten bei geöffnetem Gehäuse 10' ermöglicht.

Nach Montage der optischen Komponenten und Zusammenfügen der Elemente 20', 30' zu dem Gehäuse 10' ist das Gehäuse 10' lediglich noch an den Stirnseiten des zylindrischen Hohlprofils offen. Die Stirnseiten können durch entsprechende Abdeckungen geschlossen werden, welche beispielsweise in Nuten 37' eingeschnappt werden können.

### Bezugszeichenliste

- 10: Gehäuse
- 11: Frontseite
- 12: Bodenseite
- 13: erste Seitenwand
- 14: zweite Seitenwand
- 20: erstes Element
- 24: Öffnung
- 30: zweites Element
- 35: Zwischenwand
- 36: Öffnung

- 10': Gehäuse
- 11': Frontseite
- 12': Bodenseite
- 13': erste Seitenwand
- 14': zweite Seitenwand
- 15': Lichtsender
- 16': Lichtlinse
- 17': Platine
- 20': erstes Element
- 22': Rastnase
- 23': Rastnase
- 25': Zwischenwand
- 26': Öffnung
- 30': zweites Element
- 32': Rastausnehmung
- 33': Rastausnehmung
- 34': Öffnung
- 37': Nut

## Patentansprüche

1. Gehäuse (10, 10') für eine optoelektronische Sensoranordnung mit wenigstens einem Lichtsender (15') und/oder einem Lichtempfänger, welches im zusammengesetzten Zustand einen im Wesentlichen rechteckigen Querschnitt aufweist und als zylindrisches Hohlprofil mit einer Frontseite (11, 11'), einer Bodenseite (12, 12'), einer ersten Seitenwand (13, 13') und einer zweiten Seitenwand (14, 14') ausgebildet und aus genau einem ersten Element (20, 20') und einem zweiten Element (30, 30') zusammengesetzt ist, **dadurch gekennzeichnet, dass** das erste Element (20, 20') wenigstens die erste Seitenwand (13, 13') umfasst und das zweite Element (30, 30') wenigstens die zweite Seitenwand (14, 14') umfasst.

2. Gehäuse nach Anspruch 1, **dadurch gekennzeichnet, dass** das erste Element (20) die erste Seitenwand (13) und die Frontseite (11) und dass das zweite Element (30) die zweite Seitenwand (14) und die Bodenseite (12) umfasst.

3. Gehäuse nach Anspruch 1, **dadurch gekennzeichnet, dass** das erste Element (20') die erste Seitenwand (13') und dass das zweite Element (30') die zweite Seitenwand (14'), die Frontseite (11') und die Bodenseite (12') umfasst.

4. Gehäuse nach einem der vorhergehenden Ansprüche, **dadurch gekennzeichnet, dass** das erste Element (20') und das zweite Element (30') über einen Rast- oder Schnappmechanismus miteinander verbindbar sind.

5. Gehäuse nach einem der vorhergehenden Ansprüche, **dadurch gekennzeichnet, dass** das erste Element (20, 20') und das zweite Element (30, 30') unlösbar miteinander verbindbar sind, vorzugsweise mittels Verkleben.

6. Gehäuse nach einem der vorhergehenden Ansprüche, **dadurch gekennzeichnet, dass** in der Frontseite (11, 11') Öffnungen (24, 34') eingestanzt sind, welche vorzugsweise als optische Blenden ausgebildet sind.

7. Gehäuse nach einem der vorhergehenden Ansprüche, **dadurch gekennzeichnet, dass** an der ersten Seitenwand (13') und/oder der zweiten Seitenwand (14) parallel zur Frontseite (11, 11') oder zur Bodenseite (12, 12') eine Zwischenwand (25', 35) angeordnet ist.

8. Gehäuse nach Anspruch 7, **dadurch gekennzeichnet, dass** in der Zwischenwand (25', 35) Öffnungen (26', 36) eingestanzt sind.

9. Gehäuse nach einem der vorhergehenden Ansprüche, **dadurch gekennzeichnet, dass** das erste Element (20, 20') und das zweite Element (30, 30') im Aluminiumstrangpressverfahren hergestellt sind.

10. Optoelektronische Sensoranordnung mit einem Gehäuse (10, 10'), in welchem wenigstens ein, vorzugsweise mehrere Lichtsender (15') und/oder Lichtempfänger angeordnet sind zur Bildung eines Lichtgitters, **dadurch gekennzeichnet, dass** das Gehäuse (10, 10') als ein Gehäuse (10, 10') gemäß einem der vorhergehenden Ansprüche ausgebildet ist.

## Claims

1. A housing (10, 10') for an optoelectronic sensor arrangement having at least one light transmitter (15') and/or one light receiver, said housing having a substantially rectangular cross-section in the assembled state and being designed as a cylindrical hollow section with a front side (11, 11'), a base side (12, 12'), a first side wall (13, 13') and a second side wall (14, 14') and being composed of precisely one first element (20, 20') and one second element (30, 30'), **characterised in that** the first element (20,. 20') includes at least the first side wall (13, 13') and the second element (30, 30') includes at least the second side wall (14, 14').

2. A housing in accordance with claim 1, **characterised in that** the first element (20) includes the first side wall (13) and the front side (11); and **in that** the second element (30) includes the second side wall (14) and the base side (12).

3. A housing in accordance with claim 1, **characterised in that** the first element (20') includes the first side wall (13'); and **in that** the second element (30') includes the second side wall (14'), the front side (11') and the base side (12').

4. A housing in accordance with any one of the preceding claims, **characterised in that** the first element (20') and the second element (30') are connectable to one another via a latch or snap-action mechanism.

5. A housing in accordance with any one of the preceding claims, **characterised in that** the first element (20, 20') and the second element (30, 30') are unreleasably connected to one another, preferably by means of adhesive bonding.

6. A housing in accordance with any one of the preceding claims, **characterised in that** openings (24, 34') are punched in the front side (11, 11') and are preferably made as optical apertures.

7. A housing in accordance with any one of the preceding claims, **characterised in that** an intermediate wall (25', 35) is arranged at the first side wall (13') and/or at the second side wall (14) parallel to the front side (11, 11') or to the base side (12, 12').

8. A housing in accordance with claim 7, **characterised in that** openings (26', 36) are punched in the intermediate wall (25', 35).

9. A housing in accordance with any one of the preceding claims, **characterised in that** the first element (20, 20') and the second element (30, 30') are manufactured in an aluminium extrusion process.

10. An optoelectronic sensor arrangement having a housing (10, 10') in which at least one light transmitter (15'), preferably a plurality of light transmitters, and/or one light receiver are arranged for the formation of a light grid, **characterised in that** the housing (10, 10') is made as a housing (10, 10') in accordance with any one of the preceding claims.

## Revendications

1. Boîtier (10, 10') pour un agencement capteur optoélectronique comprenant au moins un émetteur de lumière (15') et/ou un récepteur de lumière, qui présente à l'état assemblé une section transversale essentiellement rectangulaire et est réalisé sous forme de profil creux cylindrique avec un côté frontal (11, 11'), un côté de fond (12, 12'), une première paroi latérale (13, 13') et une seconde paroi latérale (14, 14') et est composé exactement d'un premier élément (20, 20') et d'un second élément (30, 30'), **caractérisé en ce que** le premier élément (20, 20') comprend au moins la première paroi latérale (13, 13') et le second élément (30, 30') comprend au moins la seconde paroi latérale (14, 14').

2. Boîtier selon la revendication 1, **caractérisé en ce que** le premier élément (20) comprend la première paroi latérale (13) et le côté frontal (11), et **en ce que** le second élément (30) comprend la seconde paroi latérale (14) et le côté de fond (12).

3. Boîtier selon la revendication 1, **caractérisé en ce que** le premier élément (20') comprend la première paroi latérale (13'), et **en ce que** le second élément (30') comprend la seconde paroi latérale (14'), le côté frontal (11') et le côté de fond (12').

4. Boîtier selon l'une des revendications précédentes, **caractérisé en ce que** le premier élément (20') et le second élément (30') peuvent être reliés l'un à l'autre via un mécanisme à enclenchement ou à encliquetage.

5. Boîtier selon l'une des revendications précédentes, **caractérisé en ce que** le premier élément (20, 20') et le second élément (30, 30') peuvent être reliés l'un à l'autre de manière non détachable, de préférence au moyen d'un collage.

6. Boîtier selon l'une des revendications précédentes, **caractérisé en ce que** des ouvertures (24, 34') sont poinçonnées dans le côté frontal (11, 11'), ces ouvertures étant de préférence réalisées sous forme de diaphragmes optiques.

7. Boîtier selon l'une des revendications précédentes, **caractérisé en ce qu'**une paroi intermédiaire (25', 35) est agencée contre la première paroi latérale (13') et/ou la seconde paroi latérale (14) parallèlement au côté frontal (11, 11') ou au côté de fond (12, 12').

8. Boîtier selon la revendication 7, **caractérisé en ce que** des ouvertures (26', 36) sont poinçonnées dans la paroi intermédiaire (25', 35).

9. Boîtier selon l'une des revendications précédentes, **caractérisé en ce que** le premier élément (20, 20') et le second élément (30, 30') sont réalisés par un procédé d'extrusion à partir d'aluminium.

10. Agencement capteur optoélectronique comprenant un boîtier (10, 10') dans lequel est/sont agencés au moins un et de préférence plusieurs émetteur(s) de lumière (15') et/ou récepteur(s) de lumière pour former une trame lumineuse, **caractérisé en ce que** le boîtier (10, 10') est réalisé sous forme d'un boîtier (10, 10') selon l'une des revendications précédentes.
